Europäisches Patentamt

(19) European Patent Office

Office européen des brevets

(11) Numéro de publication : **0 291 384 B1**

## (12) FASCICULE DE BREVET EUROPEEN

(45) Date de publication du fascicule du brevet :
27.11.91 Bulletin 91/48

(51) Int. Cl.$^5$ : **A01G 9/02**

(21) Numéro de dépôt : 88401063.8

(22) Date de dépôt : 02.05.88

(54) Dispositif de décoration végétale en surélévation.

(30) Priorité : 07.05.87 FR 8706598

(43) Date de publication de la demande :
17.11.88 Bulletin 88/46

(45) Mention de la délivrance du brevet :
27.11.91 Bulletin 91/48

(84) Etats contractants désignés :
AT BE CH DE ES GB GR IT LI LU NL SE

(56) Documents cités :
WO-A- 84/01087
DE-A- 2 824 506
FR-A- 2 550 073

(73) Titulaire : **MAIRIE DE NANTES**
**11 boulevard de Stalingrad**
**F-44000 Nantes (FR)**

(72) Inventeur : **Jancel, Roland**
**11 boulevard Stalingrad**
**Nantes (Loire Atlantique) (FR)**

(74) Mandataire : **Cabinet Pierre HERRBURGER**
**115, Boulevard Haussmann**
**F-75008 Paris (FR)**

## Description

L'invention est relative à un dispositif de décoration végétale en surélévation et elle concerne plus particulièrement les aménagements urbains où son caractère modulaire permet des combinaisons multiples.

On connaît, dans la plupart des villes, des dispositifs de décoration florale présentés au sol, ce qui implique l'emploi de matériaux lourds et une structure renforcée susceptible de résister au vandalisme.

Ces équipements sont de ce fait coûteux, tant en ce qui concerne l'investissement que la gestion, ce qui a pour conséquence directe d'en limiter le nombre. Ceci va à l'encontre des souhaits des responsables municipaux désirant que leur cité soit toujours plus fleurie, toujours plus accueillante.

Par ailleurs, on connaît également des dispositifs conçus comme des présentoirs ou des bacs de culture superposés et comportant des analogies avec la présente invention.

Ainsi, suivant le brevet français 2520972 du 16 Décembre 1982, les bacs superposés sont de type à fond plat, donc sans réserve d'eau. Ils sont tous de diamètre identique et comportent tous un moyeu central dont la hauteur est toujours égale à la hauteur de l'élément et constitue une entretoise d'écartement. Les éléments sont engagés par le moyeu sur une colonne porteuse et l'immobilisation se fait par l'intermédiaire d'une goupille traversante.

Du fait de sa structure constituée d'un fond plat ou très faiblement incliné surmonté d'un tronc de cône, chaque élément en position superposée ne présente qu'une surface de culture en forme de couronne, inférieure à la moitié de la surface totale de l'élément, ce qui ne permet pas une utilisation optimale du compost disponible.

Enfin, dans ce mode de construction, l'absence de réserve d'eau à chaque élément est compensée par une réserve d'eau située au sommet du mât. Cette disposition constitue un inconvénient majeur le rendant incompatible avec une utilisation ornementale en milieu urbain.

Suivant le brevet français N° 2550073, il est également décrit un ensemble présentoir à étages, notamment à usage de jardinières, comportant une disposition alternée de bacs et de parties tubulaires centrales, les parties centrales étant pourvues d'un rebord interne formant une réserve d'eau à hauteur de chaque bac.

L'invention faisant l'objet du présent document a donc pour but de permettre la décoration végétale en hauteur en milieu urbain, notamment dans les secteurs piétonniers ou semi-piétonniers, mais aussi dans les jardins ou en intérieur grâce à un dispositif permettant le bon développement des végétaux en leur offrant des quantités optimales de substrat, de lumière et d'eau. A titre indicatif, la surface utile cultivable de chaque élément est toujours supérieure aux trois quarts de la surface totale de celui-ci, même dans les configurations d'assemblage les plus défavorables. Le dispositif permet, en outre, de limiter à la fois les contraintes de maintenance et la vulnérabilité au vandalisme.

Pour répondre à ces objectifs, l'invention concerne un dispositif de décoration végétale en surélévation du genre comportant des bacs de culture superposables, présentant une paroi d'allure générale tronconique ouverte vers le haut et comprenant une partie formant bac proprement dit et une partie centrale tubulaire dont les extrémités constituent les appuis des bacs superposés, dispositif caractérisé en ce que chaque bac est formé d'au moins trois troncs de cônes successifs, un tronc de cône de base d'une certaine ouverture, un tronc de cône intermédiaire d'une plus grande ouverture, complété par un troisième tronc de cône de bordure de même pente que le cône de base, de manière telle qu'à l'état partiellement emboîté, les parois de deux bacs adjacents délimitent une aire de culture supérieure aux trois quarts de la surface de l'ouverture du cône de bordure, tandis que la partie centrale tubulaire forme un moyeu central du tronc de cône de base pour constituer avec ce dernier une réserve d'eau.

D'autres caractéristiques et avantages ressortiront encore de la description détaillée ci-après, d'un mode de réalisation donné ici à titre d'exemple sur les dessins joints, dans lesquels :

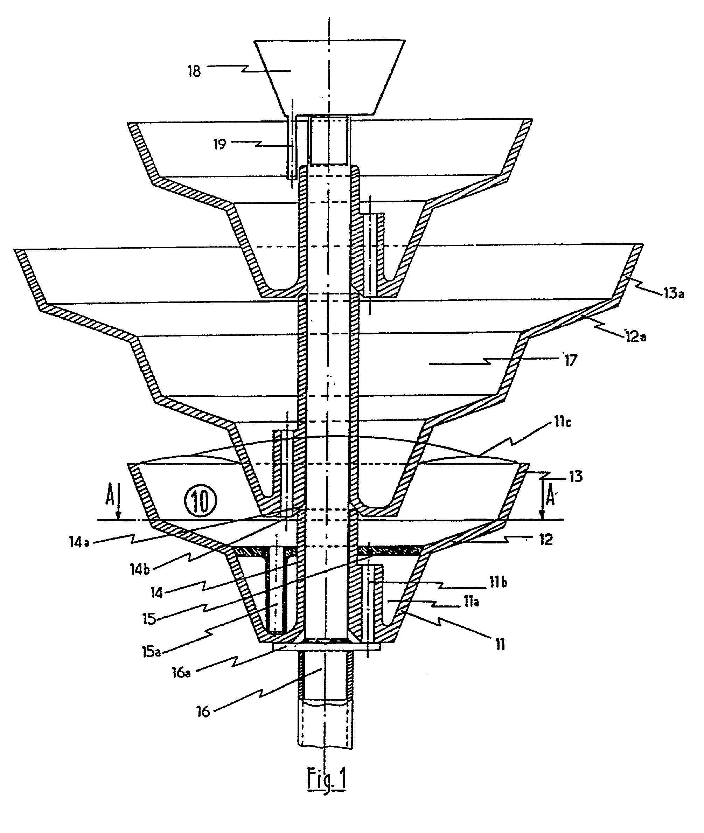

— la figure 1 est une vue en coupe montrant l'architecture des éléments du dispositif à l'état superposé des bacs ;

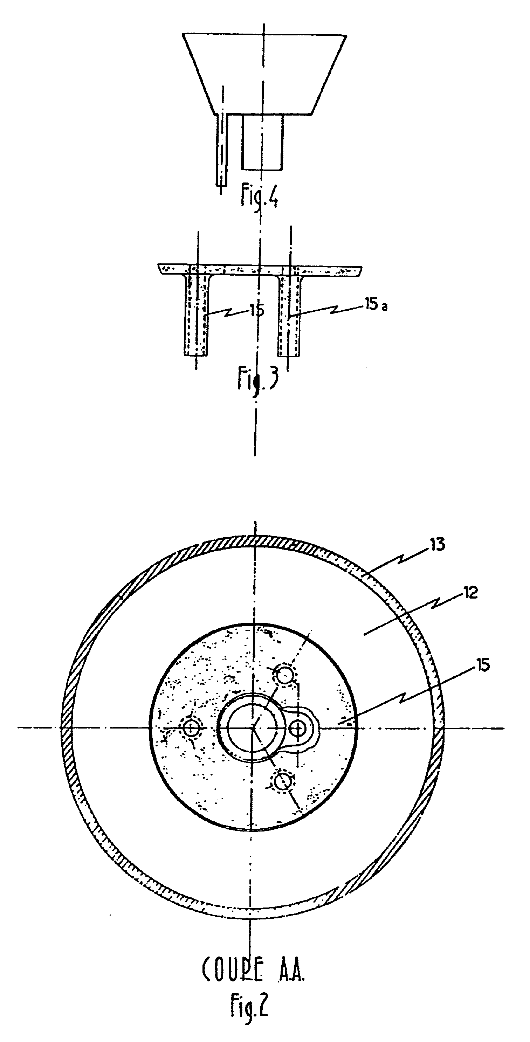

— la figure 2 est une vue en coupe selon AA' de la figure 1 ;

— la figure 3 est une vue en élévation du plancher soutenant le substrat ;

— la figure 4 est une vue en élévation de l'élément de remplissage ;

— la figure 5 est une vue montrant l'application du dispositif au sommet d'un mât ;

— la figure 6 est une vue montrant le dispositif construit en colonne ;

— la figure 7 est une vue montrant le dispositif utilisé en décoration florale d'un candélabre ;

— les figures 8 et 9 sont des vues montrant deux modes de réalisation en applique ;

— la figure 10 est une vue du dispositif utilisé en suspension.

Le dispositif pourra être utilisé au sommet d'un mât (16) sur une place ou sur un plateau piétonnier. Dans ce cas particulier, trois coupes seront utilisées soit, en partant de la base : une coupe petit modèle (10) à 3 troncs de cônes, une coupe grand modèle (17) à 5 troncs de cônes et une coupe petit modèle (10) à 3 troncs de cônes. Le mât supportant l'ensemble dissimulera la canalisation amenant l'eau d'arrosage jusqu'au sommet du dispositif. Une vanne de commande (20) située au pied du mât sera accessible par une trappe (21) prévue à cet effet. Le matériau constituant les coupes ou bacs (10 et 17) pourra être de différente nature ; la résine armée, par sa résistance et sa longévité conviendra particulièrement à la réalisation. Ce matériau permettra par ailleurs un choix de couleurs permettant l'harmonisation du dispositif avec le cadre environnant.

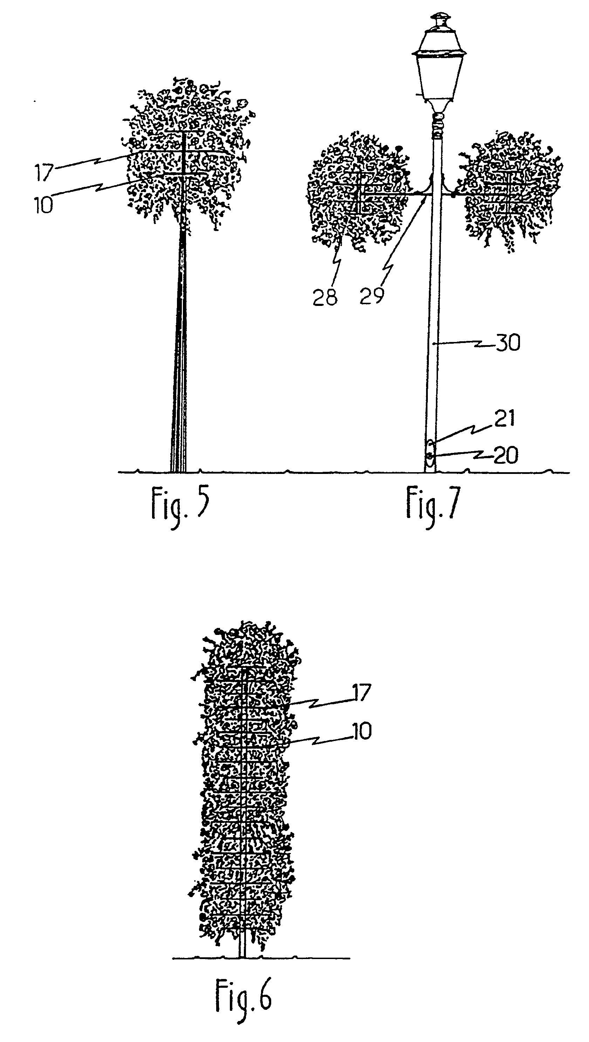

Dans le même type de situation, mais aussi sur des plates-bandes ou des massifs fleuris, on peut envisager le montage du dispositif sous forme de colonnes fleuries (Fig. 6). Le nombre d'éléments étant indéterminé, il est possible de jouer sur les hauteurs et varier les effets décoratifs à l'infini.

Dans le premier exemple évoqué ci-dessus, le mât utilisé comme support pourrait sans inconvénient être constitué par un pied de lampadaire. Par extension, on peut envisager que ce soit l'ensemble d'un candélabre (Fig. 7) qui serve de support au dispositif, ce qui permet sur un même élément de mobilier urbain, d'associer la fonction ornementale et la fonction d'éclairage en les rendant complémentaires aux différentes heures de la journée.

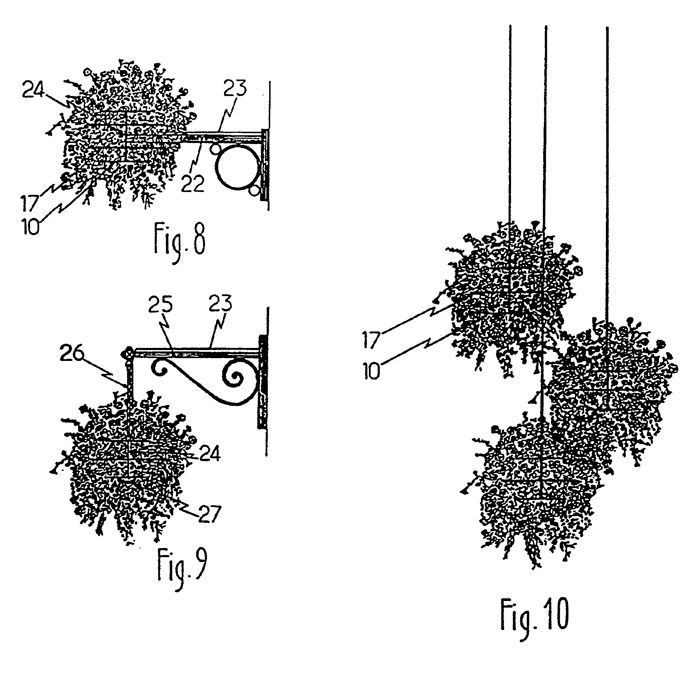

Dans les rues étroites, le manque d'espace interdit le plus souvent les possibilités de décoration ; dans ce cas particulier, le dispositif apporte une solution aussi simple qu'efficace par son montage à l'extrémité d'une console, ainsi qu'il est montré aux figures 8 et 9.

A cet effet, deux dispositions sont envisageables, soit sous la forme portée, soit sous la forme suspendue. Dans la forme portée, la console (22) comportera à son extrémité un axe (Fig. 8) dressé sur le quel viendront s'emboîter les éléments (10 et 17) du dispositif. La canalisation d'arrosage (23) longera la barre supérieure de la console avant de remonter dans l'axe du dispositif. On peut également envisager la forme suspendue. Les trois coupes ou bacs (10 et 17) seront emboîtées sur un moyeu (28) qui assurera cohésion et rigidité. L'ensemble sera suspendu à la console (25) par une chaîne (26) qui traversera le moyeu (24). Le dernier maillon s'accrochera sur un disque métallique (27) de diamètre supérieur au moyeu. Ce disque formera la butée supportant le poids du dispositif. La longueur de la chaîne pourra facilement être réglée en fonction de l'effet décoratif recherché. Dans cet exemple de réalisation, la canalisation d'arrosage (22) pourra être dissimulée le long de la chaîne.

Le dispositif peut, par ailleurs, trouver des applications dans la décoration intérieure des bâtiments en particulier dans les halls ou les cages d'escaliers. Le montage en suspension est particulièrement recommandé, la chaîne pouvant être dans ce cas particulier remplacée par un câble doublé si nécessaire par la canalisation d'arrosage dont le diamètre réduit ne nuira pas à l'esthétique de l'ensemble (Fig. 10).

Comme il va de soi et comme il résulte d'ailleurs de ce qui précède, l'invention ne se limite nullement à ceux de ses modes d'application non plus qu'à ceux des modes de réalisation de ses diverses parties ayant été plus spécialement indiqués. Elle en embrasse au contraire toutes les variantes qui sont couvertes par la revendication 1, notamment celles où le matériau est de nature différente, cuivre, aluminium, amiante, ciment, terre cuite, etc.

## Revendications

1. Dispositif de décoration végétale en surélévation du genre comportant des bacs de culture (10) superposables, présentant une paroi d'allure générale tronconique ouverte vers le haut et comprenant une partie formant bac proprement dit et une partie centrale tubulaire dont les extrémités constituent les appuis des bacs superposés, dispositif caractérisé en ce que chaque bac (10) est formé d'au moins trois troncs de cônes successifs, un tronc de cône de base (11) d'une certaine ouverture, un tronc de cône intermédiaire (12) d'une plus grande ouverture, complété par un troisième tronc de cône de bordure (13) de même pente que le cône de base (11), de manière telle qu'à l'état partiellement emboîté, les parois de deux bacs adjacents délimitent une aire de culture (11c) supérieure aux trois quarts de la surface de l'ouverture du cône de bordure, tandis que la partie centrale tubulaire forme un moyeu central (14) du tronc de cône de base pour constituer avec ce dernier une réserve d'eau (11a).

2. Dispositif de décoration végétale suivant l'une quelconque des revendications précédentes, caractérisé en ce qu'au moins l'un des bacs de culture superposés comporte une paroi constituée d'un tronc de cône de base (11), d'un tronc de cône intermédiaire (12) et d'un tronc de cône de bordure (13), ce dernier étant prolongé d'un tronc de cône intermédiaire à grande ouverture (12a) de même pente que l'élément intermédiaire (12) et d'un tronc de cône de bordure supérieure (13a) de même pente que les troncs de cône de base (11) et de bordure (13).

3. Dispositif selon la revendication 1, caractérisé en ce que le moyeu central (14) de chaque base est d'allure générale cylindrique, chaque moyeu comportant à la base un embrèvement de centrage (14a) destiné à recevoir l'extrémité supérieure (14b) du moyeu d'un bac inférieur de manière telle qu'à chaque fois les moyeux constituent des entretoises d'écartement entre les bacs superposés.

4. Dispositif selon la revendication 1, caractérisé en ce que chaque réserve d'eau (11a) est séparée de l'espace supérieur réservé au substrat de culture (17) par un plancher perforé (15), au moins un conduit traversant (15a) étant prévu pour recevoir une mèche permettant à l'eau du réservoir (11a) de migrer par capillarité et d'humidifier le substrat de culture (17).

5. Dispositif selon la revendication 1, caractérisé en ce que chaque réserve d'eau (11a) est pourvue d'un conduit (11b) à deux fonctions, l'une pour l'alimentation des bacs inférieurs par l'eau d'arrosage percolant à travers le bac supérieur, l'autre de trop plein pour évacuer les excès d'eau issus soit de l'arrosage, soit des intempéries.

6. Dispositif selon l'une quelconque des revendications 1 à 5, caractérisé en ce que, en disposition portée, les bacs de culture superposés sont disposés, par leur moyeu central, sur un mât de support et l'extrémité du mât (16) reçoit un récipient (18) fixé par emboîtement, ce récipient étant pourvu en partie inférieure d'une évacuation (19), ce réservoir temporaire étant destiné à accélérer le remplissage des réservoirs (11a) des éléments superposés.

7. Dispositif selon la revendication 6, caractérisé en ce que les bacs s'emboîtent sur un mât cylindrique (16) pourvu d'une butée (16a) maintenant le dispositif à la hauteur déterminée.

8. Dispositif selon l'une quelconque des revendications 1 à 4, caractérisé en ce que les bacs (10 à 17) sont solidarisés par un moyeu (24) de même longueur que la somme des moyeux centraux (14) des bacs superposés, l'ensemble s'accrochant à des consoles (29) solidaires d'un pied de lampadaire (30).

## Patentansprüche

1. Vorrichtung zur hochliegenden Dekoration mit Pflanzen vom übereinanderstellbare Kulturtöpfe (10) aufweisenden Typ, die eine im wesentlichen kegelstumpfförmige, nach oben offene Wand aufweisen und einen den eigentlichen Topf bildenden Teil und einen röhrenförmigen Mittelteil umfassen, auf dessen Enden die aufgesetzten Töpfe ruhen, Vorrichtung, dadurch gekennzeichnet, daß jeder Topf (10) aus mindestens drei aufeinanderfolgenden Kegelstümpfen besteht, einem Basiskegelstumpf (11) mit einem gewissen Öffnungswinkel, einem mittieren Kegelstumpf (12) mit größerem Öffnungswinkel und einem dritten Randkegelstumpf (13) mit derselben Neigung, wie der Basiskegel (11), derart, daß die Wände zweier benachbarter Töpfe in der teilweise zusammengesteckten Stellung eine Kulturfläche (11c) begrenzen, die größer ist, als drei Viertel der Öffnungsfläche des Randkegels während der röhrenförmige Mittelteil eine Zentralnabe (14) des Basiskegelstumpfes bildet, um mit diesem einen Wasservorrat (11a) zu bilden.

2. Vorrichtung zur Dekoration mit Pflanzen gemäß irgendeinem der vorangehenden Patentansprüche, dadurch gekennzeichnet, daß mindestens einer der übereinandergestellten Kulturtöpfe eine Wand aufweist, die aus einem Basiskegelstumpf (11), einem mittieren Kegelstumpf (12) und einem Randkegelstumpf (13) besteht, wobei dieser letztgenannte sich in einem mittieren Kegelstumpf mit großer Öffnung (12a) derselben Neigung, wie das Zwischenstück (12), forsetzt und in einem oberen Randkegelstumpf (13a) derselben Neigung, wie der Basiskegelstumpf (11) und der Randkegelstumpf (13).

3. Vorrichtung gemäß Patentanspruch 1, dadurch gekennzeichnet, daß die Zentralnabe (14) jedes Topfes im wesentlichen zylindrisch ist, wobei jede Nabe an ihrem unteren Ende einen Zentrierversatz (14a) aufweist, der dazu bestimmt ist, das obere Ende (14b) der Nabe eines unter ihm befindlichen Topfes aufzunehmen, derart, daß die Naben in jedem Fall Abstandshülsen zwischen den übereinandergestellten Töpfen darstellen.

4. Vorrichtung gemäß Patentanspruch 1, dadurch gekennzeichnet, daß jeder Wasservorrat (11a) vom darüberliegenden, für das Kultursubstrat (17) bestimmten Raum durch einen durchlöcherten Boden (15) getrennt ist, wobei mindestens eine hindurchgehende Leitung (15a) vorgesehen ist, um einen Docht aufzunehmen, der dem Wasser aus dem Vorratsbehälter (11a) erlaubt, durch Kapillarität aufzusteigen und das Kultursubstrat (17) zu befeuchten.

5. Vorrichtung gemäß Patentanspruch 1, dadurch gekennzeichnet, daß jeder Wasservorrat (11a) mit einer Leitung (11b) mit zwei Funktionen versehen ist, der einen zur Versorgung der unteren Töpfe durch das Bewässerungswasser, das durch die oberen Töpfe fließt, der anderen als Überlauf zur Ableitung überschüssigen Wassers aus der Bewässerung oder bei Unwetter.

6. Vorrichtung gemäß irgendeinem der Patentansprüche 1 bis 5, dadurch gekennzeichnet, daß die übereinandergestellten Kulturtöpfe in getragener Anordnung mittels ihrer Zentralnabe auf einem Tragmast angeordnet sind und das Ende des Mastes (16) einen Behälter (18) aufnimmt, der durch Aufstecken befestigt ist, wobei dieser Behälter unten mit einem Ablauf (19) versehen ist und dazu bestimmt ist, die Füllung der Vorratsbehälter (11a) der übereinandergestellten Elemente zu beschleunigen.

7. Vorrichtung gemäß Patentanspruch 6, dadurch gekennzeichnet, daß die Töpfe auf einen zylindrischen Mast (16) aufgesteckt werden können, der mit einem Anschlag (16a) versehen ist, der die Vorrichtung auf der festgelegten Höhe hält.

8. Vorrichtung gemäß irgendeinem der Patentansprüche 1 bis 4, dadurch gekennzeichnet, daß die Töpfe (10 bis 17) durch eine Nabe (24) gleicher Länge, wie die Summe der Zentralnaben (14) der übereinandergestellten Töpfe miteinander verbunden werden, wobei die gesamte Vorrichtung an Träger (19) gehängt wird, die mit einem Laternenpfahl (30) verbunden sind.

## Claims

1. Decorative device for plants raised above ground level, of the type comprising tubs for plants (10) which can be superposed one on top of the other, presenting a side which is shaped in general like a truncated cone open at the top and comprising one part being the tub itself and one central tubular part whose extremities form the supports for the superposed tubs, characterised in that each tub (10) is formed by at least three successive truncated cones, a base truncated cone (11) with a certain opening, an intermediate truncated cone (12) with a larger opening, completed by a third rim truncated cone (13) of the same inclination as the base cone (11), in such a manner that in the partially nested state the sides of two adjacent tubs delimit a growing area (11c) greater than three quarters of the surface of the opening of the rim cone, while the central tubular part forms a central hub (14) of the base truncated cone so as to form, along with this latter, a reservoir of water (11a).

2. Decorative device for plants according to any one of the preceding claims, characterised in that at least one of the superposed tubs for plants comprises a side consisting of a base truncated cone (11), an intermediate truncated cone (12) and a rim truncated cone (13), this latter being an extension of an intermediate truncated cone (12a) with a wide opening of the same inclination as the intermediate element (12) and of a rim truncated upper cone (13a) of the same inclination as the base (11) and rim (13) truncated cones.

3. Device according to claim 1, characterised in that the central hub (14) of each tub is in general cylindrical in form, each hub having at its base a centering bevel shoulder (14a) for the purpose of receiving the upper extremity (14b) of the hub of a tub below in such a manner that in each case the hubs form distance pieces between the superposed tubs.

4. Device according to claim 1, characterised in that each water reservoir (11a) is separated from the space above reserved for the growing medium (17) by a perforated floor (15), at least one conduit (15a) which passes through it being provided for carrying a wick enabling the water from the reservoir store (11a) to migrate by capillary action and to moisten the growing medium (17).

5. Device according to claim 1, characterised in that each water reservoir (11a) is provided with a conduit (11b) which serves two purposes, one being to supply the lower tubs with the water percolating through the upper tub, and the other being to drain off excess water resulting either from watering or from wet weather.

6. Device according to any of claims 1 to 5, characterised in that, in the supported arrangement, the superposed tubs are disposed by their central hub on a supporting post and that the end of the post (16) receives a receptacle (18) which is fixed by nesting, the lower part of this receptacle being provided with an outlet (19), this temporary reservoir being intended to speed up the filling of the reservoirs (11a) of the superposed elements.

7. Device according to claim 6, characterised in that the tubs fit onto a cylindrical post (16) provided with a stop (16a) which keeps the device at the desired height.

8. Device according to any of claims 1 to 4, characterised in that the tubs (10 to 17) are linked together by a hub (24) of the same length as the sum of the central hubs (14) of the superposed tubs, the whole system hanging on brackets (29) which are integral with a lamp standard (30).

18

19

13a

12a

17

11c

13

A

⑩

A

14a

12

14b

11b

14

11a

15

11

15a

16a

16

**Fig.1**

Fig.4

15    15 a

Fig.3

13

12

15

COUPE A.A.
Fig.2

Fig. 5

Fig.7

Fig.6

8

Fig. 8

Fig. 9

Fig. 10